# EUROPEAN PATENT APPLICATION

(11) **EP 4 672 399 A1**
(43) Date of publication of application: **31.12.2025**
(21) Application number: 25176635.8
(22) Date of filing: 15.05.2025
(51) Int. Cl.: H01M 10/04, H01M 50/202, H01M 50/22, H01M 50/233, H01M 50/242, H01M 50/273, H01M 50/519, H01M 50/548

(54) **POWER SOURCE UNIT**

(30) Priority: 26.06.2024 US 202418754791
(71) Applicant: Treon Oy, 33720 Tampere (FI)
(72) Inventor: Kakkonen, Lari, 33720 Tampere (FI); Vesa, Mikko, 33720 Tampere (FI); Ylä-Outinen, Topi, 33720 Tampere (FI)
(74) Representative: Moosedog Oy

(57) **Abstract**

Disclosed is power source unit (100, 300) connected to a vibration measurement device (400) and power source unit comprising a battery (102), a cap (104), and a damping element (106, 302). The battery comprises a first electrode (108A) of battery is contacted to a first electrical connector (110A); and a second electrode (108B) of battery is contacted to a second electrical connector (110B). The cap comprises a first end (112A) and a second end (112B) that is opposite to first end; and wherein cap is attached at least partly over portion of battery. The damping element comprises a third end (118A, 306) and a fourth end (118B) that is opposite to third end; and a receiving portion (120) that extends from third end to fourth end to define an internal hollow space that accommodates at least partly battery, first electrical connector, second electrical connector, cap.

## Description

### TECHNICAL FIELD

The present disclosure relates to power source units.

### BACKGROUND

Vibration measurement is essential for monitoring performance of various mechanical devices such as motors, pumps, fans, and similar. The existing vibration measurement devices often face challenges related to an impact of a mass of a battery on accuracy of measurement data collected using the existing vibration measurement devices. The mass of the battery leads to vibration resonance within the vibration measurement device, which may lead to distorted measurement results and reduced performance. Moreover, the use of the battery that has more capacity and is comparatively larger in size than traditional batteries is also impossible to operate within the vibration measurement device, because when the mass of the battery increases the vibration resonance also increases. Additionally, the batteries have different internal structures which may further exacerbate the vibration resonance.

Existing techniques often involve the use of batteries that have low capacity, which reduces a size of the battery, but helps in reduction of the vibration resonance. Moreover, the battery and an internal structure of the battery are manufactured by reducing allowable deviation in the dimensions of the battery and the internal structure. Such reduction in allowable deviation results in reducing the vibration resonance issue. However, this increases the implementation cost and will not help with the battery's internal structure. Additionally, the use of batteries having low-capacity limits usage of the battery and thus reduces an overall performance of the vibration measurement device. The existing technique also allows attaching the battery with the internal structure using a mechanical locking feature to reduce the mass and to minimize the vibration resonance issue. However, attaching the battery with the mechanical locking feature can be effective for holding the battery in place but it may not eliminate tolerances or the vibrational resonances of the internal structure.

Therefore, in light of the foregoing discussion, there exists a need to overcome the aforementioned drawbacks.

### SUMMARY

The aim of the present disclosure is to provide a power source unit which helps absorb resonances and eliminates tolerance gaps within the power source unit. The aim of the present disclosure is achieved by power source units as defined in the appended independent claims to which reference is made to. Advantageous features are set out in the appended dependent claims.

Throughout the description and claims of this specification, the words *"comprise",* "*include*"*,* "*have*"*,* and "*contain*" and variations of these words, for example "*comprising*" and "*comprises*"*,* mean "*including but not limited to*"*,* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a perspective view of a cross-section of a power source unit, in accordance with an embodiment of the present disclosure;
FIG. 2 illustrates a perspective view of the power source unit of FIG. 1, in accordance with an embodiment of the present disclosure;
FIGs. 3A and 3B collectively show a damping element of a power source unit, wherein the damping element comprises a first fin, in accordance with an embodiment of the present disclosure; and
FIG. 4 shows a cross-section view of a vibration measurement device comprising a power source unit of FIG. 1, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a power source unit connected to a vibration measurement device and the power source unit comprising:
a battery, wherein
   a first electrode of the battery is contacted to a first electrical connector; and
   a second electrode of the battery is contacted to a second electrical connector;
a cap, comprising:
   a first end and a second end that is opposite to the first end; and
   wherein the cap is attached at least partly over the portion of the battery; and
a damping element, comprising:
   a third end and a fourth end that is opposite to the third end; and
   a receiving portion that extends from the third end to the fourth end to define an internal hollow space that accommodates at least partly the battery, the first electrical connector, the second electrical connector, and the cap.

The present disclosure provides the aforementioned power source unit which facilitates improved performance of the device. By incorporating the damping element that is moulded around at least the battery, the first electrical connector, the second electrical connector, and the cap, the power source unit effectively reduces an impact of vibrations and/or resonances caused by the battery. Furthermore, the battery, the first electrical connector, the second electrical connector, and the cap are arranged in such a manner within the internal hollow space such that a space within internal hollow space is effectively utilised. A configuration of the battery, the first electrical connector, the second electrical connector, and the cap is such that the power source unit is designed in a compact manner. The aforementioned power source unit is simple, reliable, robust and can be implemented with ease.

Throughout the present disclosure, the term "*power source unit*" refers to a component that provides electrical power to the vibration measurement device. The power source unit keeps the battery tightened within the vibration measurement device. In this regard, the power source unit is operatively connected to the vibration measurement device. In an instance, the power source unit is connectable into a body of the vibration measurement device. In such an instance, the vibration measurement device has a rigid internal structure. In another instance, the power source unit is connectable outside of a body of the vibration measurement device. In both the instances, an electrical pathway is established between the power source unit and the vibration measurement device, wherein the electrical pathway is established by utilising at least one of: a physical wire, an electrical contact, a connector.

The vibration measurement device receives the electrical power from the power source unit, thus enabling the vibration measurement device to perform required functions. The vibration measurement device is used for electrical devices, for example, such as a pump, a motor, a compressor, and similar.

Optionally, the vibration measurement device comprises an acceleration transducer, wherein the acceleration transducer is used to measure an acceleration data of the vibration measurement device. Herein, the acceleration data comprises at least one of: a vibration data, a rotational speed, of the device. When the acceleration transducer is implemented as the accelerometer sensor, the accelerometer sensor could be based on microelectromechanical systems (MEMS) technology accelerometer. Moreover, an orientation mechanism of the accelerometer sensor is to align an accelerometer axis with the device to maximise a measurement performance of the accelerometer sensor. Moreover, the acceleration transducer could be used for monitoring condition of the device in order to plan and execute maintenance or to predict maintenance actions. That is why it is important to keep all additional vibrations coming from the power source unit as minimum as possible to be able to get accurate vibration measurement results.

Optionally, the power source unit is connected to the vibration measurement device, wherein the vibration measurement device is configured to be used in explosive atmospheres (ATEX). In this regard, the power source unit is designed for use in potentially hazardous environments with explosive atmospheres, as regulated by atmosphere Explosible (ATEX) directive. Such configuration of the power source unit ensures that the vibration measurement device complies with safety standard and can operate safely in areas where presence of flammable gases, vapors, and/or combustible dusts poses a risk of explosion. A technical effect of configuring the vibration measurement device to be used in the explosive atmospheres in such a manner is that an operational integrity is maintained and there is minimization of a risk of ignition sources in such environments.

The battery is any one of: a rechargeable battery, a non-rechargeable battery. Examples of the battery may include, but are not limited to, a Lithium-ion battery, a Lithium polymer battery, a Lithium thionyl, a Lithium manganese, an alkaline battery, and a Nickel Metal Hydride battery. For example, the battery may be an A, an AA or an AAA size battery. The first electrode of the battery is any one of an anode or a cathode, and the second electrode of the battery is another one of the cathode or the anode. In one embodiment, the first electrode and the second electrode are on opposite ends of the battery. In another embodiment, the first electrode and the second electrode are on a same end of the battery. Optionally, the first electrode and the second electrode of the battery is extended to a side of the battery to reduce an effect of external vibration and thus enables accurate measurement of the acceleration data.

The first electrical connector and the second electrical connector are comprised in a printed circuit board (PCB). Herein, the first electrode is contacted with the first electrical connector of the PCB to establish an electrical connection between the first electrode and the first electrical connector, and the second electrode is contacted with the second electrical connector of the PCB to establish an electrical connection between the second electrode and the second electrical connector. Herein, such contact is provided optionally by welding. Additionally, such welding tightens the battery within the power source unit. Herein, the welding is performed using a welding process, for example, such as, spot welding, ultrasonic welding, resistance welding, laser welding. Such welding processes are well-known in the art.

Optionally, the power source unit further comprises the PCB, wherein the PCB comprises:
the first electrical connector and the second electrical connector arranged on opposite edges of the PCB;
a first adhesive on an area on the PCB between the first electrical connector and the second electrical connecter.

Herein, the term "*printed circuit board*" refers to a platform that is provided for arrangement and interconnection of electronic components. Optionally, the PCB is flexible in nature. Herein, the electronic components can be e.g. Surface Mount Device (SMD) components, wherein such electronic components are mounted directly on a surface of the PCB instead of being inserted through holes. In this regard, the electronic components are designed with any one of contacts that are small and/or flat, lead wires, that are soldered directly on the base of the PCB. Additionally, the electronic components are installed on at least one of: a top side, a bottom side, of the base of the PCB. Examples of such electronic components may include, but are not limited to, resistors, capacitors, inductors, diodes, and integrated circuits.

The first electrical connector and the second electrical connector of the PCB facilitate electrical connections with components that are external to the power source unit, thereby enhancing a versatility of the power source unit. A material used for manufacturing the first electrical connector and the second electrical connector is a conductive material, which facilitates conduction of electricity. Examples of the conductive material may include, but are not limited to, copper, phosphor bronze, and nickel.

Moreover, the first adhesive is applied on the base of the PCB on that side where the first terminal and the second terminal are arranged. The first adhesive is applied away from the edges of the PCB, such that dimensions of the first adhesive is less than dimensions of the PCB. When the battery is to be arranged on the PCB, the first adhesive is applied in such a manner such that at least one of: the battery is placed in a predetermined location (for example, such as a middle) on the PCB, the battery is maintained on an axis passing centrally through a longitudinal dimension of the PCB. Optionally, the first adhesive is any one of: an adhesive tape, an adhesive glue. When the first adhesive is the adhesive tape, such adhesive tape could be a double-sided tape, wherein a lower side of the double sided-tape adheres to the base of the PCB and an upper side receives the battery.

Optionally, the first adhesive is applied along a predetermined length and a predetermined width. As an example, the first adhesive is applied along a predetermined length of 37 mm, and a predetermined width of 7.00 mm.

Optionally, a given terminal has a first portion and a second portion that extends from the first portion in a perpendicular manner, wherein the first portion is positioned vertically with respect to the base of the PCB, and the second portion is positioned horizontally on the base of the PCB. Herein, the term "*given terminal*" encompasses the first terminal and the second terminal of the PCB. Herein, the second portion of the given terminal is soldered on the base of the PCB, wherein the given terminal is soldered in a similar manner as the soldering of the electrical components are on the base of the PCB. Moreover, the first portion has a predetermined height. Moreover, the second portion has a predetermined length and a predetermined width. As an example, the predetermined height of the first portion may be 11.80 millimetres (mm), the predetermined length and the predetermined width of the second portion may be 6.00 mm and 7.80 mm, respectively.

In this regard, when the battery is arranged on the base of the PCB, a first electrode of the battery is welded to the first portion of the given terminal, and the battery is positioned on the second portion of the given terminal. Hence, the second portion is designed in such a manner that it is able to withstand a pressure received when the battery is positioned on said second portion.

The cap comprises an internal hollow space as defined by the first end and the second end. The battery is arranged in this internal hollow space, in such a manner, such that a portion of the battery wherein any one of: the first electrode, the second electrode, is an anode, is covered by the second end of the cap. Additionally, the cap is used as an interface to tighten the battery in the power source unit, when the power source unit is fully manufactured. In this regard, a vertical tightening force is transformed into a horizontal tightening force, thus removing any gap between the cap and the battery.

Optionally, the first end of the cap is open, and the second end of the cap is closed, wherein the first end and the second end are two extremities of the cap. The internal hollow space receives any one of: the first electrode that is welded to the first electrical connector, the second electrode that is welded to the second electrical connector. The cap is attached in such a manner so that the cap remains in position over a designated area of the battery.

Optionally, the cap further comprises a protrusion that extends outwards from a centre of the second end. In this regard, the protrusion of the cap lies along a largest diameter of the centre of the second end. The protrusion aids in at least one of: positioning, securing, interfacing, of the cap within the vibration measurement device. A technical effect of the protrusion is that it maintains an integrity and stability when placing or orienting the power source unit in the vibration measurement device.

Optionally, a material used for manufacturing the cap is a non-conductive material. In this regard, the cap does not conduct electricity, hence the cap does not interfere with the electrical connections that are established between the battery and the electrical connectors. Such non-conductive material could be a plastic material, for example, such as polyamide, polyethylene, polypropylene, and polyethylene terephthalate. A technical effect of using the non-conductive material for manufacturing the cap is that it ensures electrical insulation and reduces a risk of short circuits and electrical hazards.

Optionally, the cap comprises an extension extending from the first end. The extension is arranged in such a manner that when manufacturing the power source unit, the extension is arranged on a longitudinal dimension of the battery. The arrangement is required to keep the battery on a central line when manufacturing the power source unit. A technical effect of the extension is that it is used to secure or align the cap in a position relative to the damping element. This enhances integration of the cap with the damping element, thereby preventing displacement or misalignment during operation.

Optionally, the extension comprises a second adhesive on an inner side of the extension. The second adhesive is used to attach the cap to battery. Optionally, the second adhesive is any one of: the adhesive tape, the adhesive glue. When the second adhesive is the adhesive tape, such adhesive tape could be a double-sided tape, wherein a lower side of the double-sided tape adheres to the inner side of the extension and an upper side adheres to the longitudinal dimension of the battery. A technical effect of the second adhesive is to adhere the extension to the battery in such a way that the battery is aligned along the central line.

Throughout the present disclosure, the term "*damping element*" refers to a component that is designed to dampen vibrations and/or reduce disturbances within the power source unit, eliminate tolerance gap within an internal structure of the battery. Such vibrations and/or disturbances within the power source unit occur due to at least one of: resonance caused by a mass of the battery, resonance caused due to the internal structure of the battery. Moreover, the damping element is used for keeping the battery tightened and not add any additional vibrational error in the acceleration data.

Functionally, the damping element creates a firm attachment and eliminates the tolerance gap between the battery and a compartment within which the battery is arranged therein. Moreover, the damping element acts as a dampening feature between the battery and the compartment, which reduces an effective resonance of the mass of the battery. Hence, sensing abilities of the acceleration transducer becomes accurate, and a capacity of the battery increases when the damping element creates the firm attachment and acts as the damping feature. Additionally, the damping element provides a means for heat dissipation and provides protection to the power source unit from external shocks. Optionally, the damping element emulates as a temperature insulator. The third end, the fourth end, the receiving portion are integrally formed as a single unit during manufacturing of the power source unit, thus ensuring that they are cohesively constructed and not formed separately.

Optionally, the receiving portion is elongated. Herein, the receiving portion extends between the third and the fourth end. Moreover, a surface of the third end has a radius from a line passing centrally through the power source unit. Optionally, the third end and the fourth end are circular in shape, wherein the surface of the third end has the radius. A technical effect of the receiving portion being elongated is that it facilitates a structural stability to the power source unit by distributing forces over a larger area.

Optionally, the third end of the damping element is closed, and the fourth end has a first opening through which the protrusion extends outwards. The protrusion that extends outwards from the first opening is not accommodated in the internal hollow space of the damping element, as said protrusion is used to align the battery along the centre line of a manufacturing mould when manufacturing the power source unit. A technical effect of the aforementioned is that it facilitates integration with other components or device as per requirement. Another technical effect of the aforementioned is that it makes sure to keep the battery, which is the heaviest component in the power source unit, on the centre line, which is a better way of absorbing resonances caused by the mass of the battery in the power source unit, when compared to conventional power source units.

Optionally, a hardness of the damping element lies in a range of A50 to A90 on a Shore A hardness scale. Herein, the Shore A hardness scale is a standardized method for measuring the hardness of materials, wherein the term "*hardness*" refers to a resistance of the damping element to indentation when external forces are applied on the damping element. Herein, the hardness of the damping element is typically measured using a Shore durometer, wherein an indenter tip that is spring loaded is pressed against a receiving portion of the damping element. The Shore durometer then measures a depth of the indentation made by the indenter tip upon application of force. The Shore A hardness scale ranges from A0 to A100, wherein materials having a high Shore A value are hard and materials having a low Shore A value are soft. In this regard, the hardness of the damping element is lies in a range of A50, i.e., medium soft, to A90, i.e., hard. The hardness of the damping element may, for example, lie in a range of A50, A55, A60, A70, or A85 to A65, A80, A85, or A90.

A technical effect of the hardness of the damping element lying in such a range is that said damping element is able to exhibit at least one of: a stiffness, a flexibility, to effectively dampen the vibrations within the power source unit.

Optionally, a thickness of the damping element lies in a range from 0.1 millimetres (mm) to 10 mm. In an instance, a value of the thickness of the damping element is low when at least one of: space within the power source unit is limited, weight of the power source unit is to be minimized. In another instance, a value of the thickness of the damping element is high when at least one of: to dampen the vibrations effectively, increase a mechanical strength of the damping element. The thickness of the damping element may for example, lie in a range from 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.5, 3, 3.5, 4, 4.5 or 5 mm to 0.4, 0.5, 0.6, 0.7, 0.8, 0.9, 1, 1.1, 1.2, 1.3, 1.4, 1.5, 1.6, 1.7, 1.8, 1.9, 2, 2.5, 3, 3.5, 4, 4.5, 5, 5.5, 6, 6.5, 7, 7.5, 8, 8.5, 9, 9.5 or 10 mm. A technical effect of the thickness of the damping element lying in such a range is that it ensures consistency when manufacturing damping element for the power source unit, which helps maintain uniformity.

Optionally, the damping element further comprises at least one of:
a first fin along the receiving portion;
a second fin on a surface of the third end; and
a third fin along the receiving portion.

In this regard, the first fin, the second fin, and/or the third fin are any one of: an indentation, a perforation. The first fin, the second fin and/or the third fin provides a small surface area as compared to a large surface area of the damping element. Such small surface area of the first fin, the second fin and/or the third fin improves compression of the damping element, as the smaller surface area requires less power to be squeezed. Moreover, the at least one of: the first fin, the second fin, the third fin, provide a more efficient damping effect to the damping element. The first fin and/or the third fin has a predefined length, a first predefined width, and a first predefined height on the receiving portion of the damping element.

Optionally, the predefined length, the first predefined width, and the first predefined height of the first fin and the third fin can vary, wherein an amount of the first and the third fins, the predefined length, the first predefined width of the first fin and the third fin can be different in different sections on the receiving portion of the damping element. Moreover, the amount and/or the first predefined width of the first fin and the third fin are fewer and/or wider, respectively, towards the third end as compared to the fourth end, where the amount and/or the first predefined width of the first fin and the third fin are greater and/or narrower, respectively. Herein, a moment (namely, a torque, a rotational force) is exerted on the fourth end due to a mass of the battery being highest than on the third end. Therefore, having greater and/or narrower fins at the fourth end is beneficial to better absorb the moment and to mitigate potential vibrations. Conversely, the third end experiences less of this moment, hence a provision of having fewer and/or wider fins at the third end. Such configuration is beneficial when the power source unit is connected to the vibration measurement device and used in applications like pumps, fans, or rotating engines.

In one embodiment, a first ratio of the predefined length of the first fin and the third fin is 1/3, wherein the predefined length of the third fin is three times longer than the predefined length of the first fin. As an example, if a length of the receiving portion may comprise three sections between the third end and the fourth end, the first fin may be located in one of: a first section, a second section, and a third section from the third end, and wherein the third fin may cover all three sections of the receiving portion. The first ratio can be at least one of: 1/1, 1/2, 1/3, 1/4, 1/5, 1/6, 1/7, 1/8, 1/9, and 1/10. In another embodiment, a second ratio of an amount of the first fin and an amount of the third fin is 1/2. As another example, with the second ratio 1/2, the amount of the first fin may be 3, then the amount of the third fin may be 6. The second ratio can be at least one of: 1/1, 1/2, 1/3, 1/4, 1/5, 1/6, 1/7, 1/8, 1/9, and 1/10. As yet another example, when the first fins which are wider than the third fins, and the first fins are positioned closer to a third end, and the third fins are positioned closer to a fourth end, it makes possible to optimise damping effect for different resonance frequencies which are mainly caused by the battery in the power source unit.

Optionally, a first fin and/or a third fin are made in two or more pieces in predefined lengths in longitudinal direction, wherein the two or more pieces are separated from each other. A technical effect of having different predefined lengths for different pieces in longitudinal direction is that different resonating frequencies can be absorbed much more efficiently in different parts of the power source unit. Optionally elastic properties of a first fin, a second fin and/or a third fin are different.

Optionally, the second fin has a predefined length. Optionally, the at least one of: the first fin, the second fin, the third fin are spaced apart to increase stiffness of the damping element. Optionally, the at least one of: the first fin, the second fin, and the third fin, can be provided on a chassis of the vibration measurement device.

Optionally, when the power source unit is operatively connected to the vibration measurement device, the power source unit is accommodated in a space within the vibration measurement device. Upon such accommodation, the space within the vibration measurement device is less than a sum of the radius of the surface of the third end and the first predefined height. When the space within the vibration measurement device is reduced, the first predefined height of the first fin or the third fin starts reducing, such that the first predefined height transforms to a second predefined height, wherein the first predefined height is greater than the second predefined height. Simultaneously, the first predefined width increases to make the first fin or the third fin wider (namely, flatter), such that the first predefined width is transformed to a second predefined width, wherein the first predefined width is lesser than the second predefined width.

A technical effect of providing at least one of: the first fin, the second fin, the third fin is that it effectively eliminates vibrations that come from the power source unit itself wherein vibrations are mainly caused by the mass of the battery in the power source unit.

Optionally, the damping element comprises one or more moulded parts. In this regard, the damping elements comprises one or more moulded parts that are formed through a moulding process. Such moulding process allows for precise shaping and integration of the material. The one or more moulded parts are designed in such a manner that they fit a particular geometry and provide damping when using the power source unit. The moulding process ensures that the one or more moulded parts are consistent in quality and dimensions.

Optionally, the damping element is manufactured by moulding (for example over-moulded), wherein an elastic material is over-moulded at least partly over a battery, a first electrical connector, a second electrical connector, and a cap, to form a single, cohesive damping element. A technical effect of over-moulding is to have more enhanced durability when compared to conventional power source units, by providing more protection to the battery, the first electrical connector, the second electrical connector, and the cap. Alternatively, optionally, the damping element comprises one or more moulded parts that are separately formed. Such configuration allows use of different materials for manufacturing the one or more moulded parts, to form a single, cohesive damping element. A technical effect of manufacturing the damping element in such a manner is that it enables at least one of: customization, repairability, of the damping element, which reduces maintenance cost.

Moreover, the damping element comprising the one or more moulded parts also provides an improved grip when the power source unit is connected to a vibration measurement device, when compared to the conventional power source units. In addition, the damping element absorbs resonances caused by the mass of the battery, eliminates tolerance gaps, and absorbs the battery internal structure resonances in the power source unit.

Optionally, at least one of: a number, a size, of the first fin or the second fin or the third fin depends on at least one of: a total area of the damping element, a moulding material used for manufacturing the damping element, a compressibility of the moulding material, a geometry of the damping element. Herein, the at least one of: the number, the size of the first fin or the second fin or the third fin are variable parameters that is used to determine a configuration of the damping element. The at least one of: the number, the size, of the first fin or the second fin or the third fin is adjusted in a proportionate manner based on the total area of the damping element. Such adjustment is suitable to effectively dissipate the vibrations. Moreover, selection of the moulding material has an impact on at least one of: a flexibility, a hardness, a dimensional stability, of the damping element. The moulding material has characteristics, for example, such as a viscosity, a flowability, a shrinkage rate. Based on such characteristics, the at least one of: the number, the size, of at least one of: the first fin, the second fin and the third fin, is adjusted as per requirement.

The at least one of: the number, the size, of the first fin or the second fin or the third fin depends on the compressibility of the moulding material, wherein the term "*compressibility*" refers to an ability of the material to deform under pressure and regain original shape of the damping element upon release. In this regard, the at least one of: the first fin, the second fin, the third fin, is designed to accommodate an ability of the damping element to maintain a structural integrity and/or withstand environmental conditions, after manufacturing the damping element of the power source unit. The at least one of: the first fin, the second fin, the third fin, depends on the geometry of the damping element, wherein the term "*geometry*" encompasses at least one of: a shape, a dimension, of the damping element. Herein, the at least one of: the number, the fin of the first fin and/or the second fin and/or the third fin is adjusted to improve performance to reduce vibrations, manufacturability, or integration within the power source unit. A technical effect of deciding at least one of: the number, the size, of the first fin, the second fin or the third fin in such a manner is that it enables customisation of the first fin, the second fin or the third fin as per requirement.

Optionally, a material used for manufacturing the damping element is at least one of: an elastic material, an elastomeric material, a non-homogenous material. The elastic material is capable of undergoing deformation under stress and returning to their original shape when the stress is removed. The elastic material may be for example, such as Thermoplastic Polyurethane (TPU), Thermoplastic Elastomer (TPE), or silicone. The elastomeric material exhibit properties that are similar to properties of the elastic material, but exhibit rubber-like properties in terms of elasticity and/or flexibility. The non-homogenous material has non-uniform composition throughout their structure, and often comprises multiple components within the non-homogenous material. A technical effect of having different moulding materials is that it enables customizing properties of the damping element as per requirement.

Optionally, the receiving portion of the damping element comprises a second opening, wherein at least two contact pads of the PCB are accessible through the second opening. Herein, the term "*contact pad*" refers to an exposed area of conductive material on the PCB which are designed to establish electrical connections with other electronic components of the device. The at least two contact pads are exposed through the second opening of the damping element, wherein the second opening is a gap within the damping element to serve as an access point for the at least two contact pads. Herein, the at least two contact pads are on opposite side of the base where the given terminal and the SMD components are not arranged. Optionally, the electronic components are soldered onto any of remaining contact pads of the PCB. A technical effect for providing the second opening such that the at least two contact pads are accessible is that it helps perform tasks related to integration or operation of the power source unit.

Optionally, the battery has a first length and the damping element has a second length. The second length of the damping element is greater than the first length of the battery, as the damping element accommodates the battery in the receiving portion. When the first length and the second length are compared, it provides a relative size and proportion within the power source unit. Moreover, the ratio of the second length to the first length provides a spatial relationship between the battery and the damping element. A technical effect of providing dimensions of the battery and the damping element in such a manner is that a dimension of any one of the battery or the damping element is known relative to another one of the damping element and the battery, which enables uniform fabrication of the damping element when manufacturing the power source unit.

### DETAILED DESCRIPTION OF THE DRAWINGS

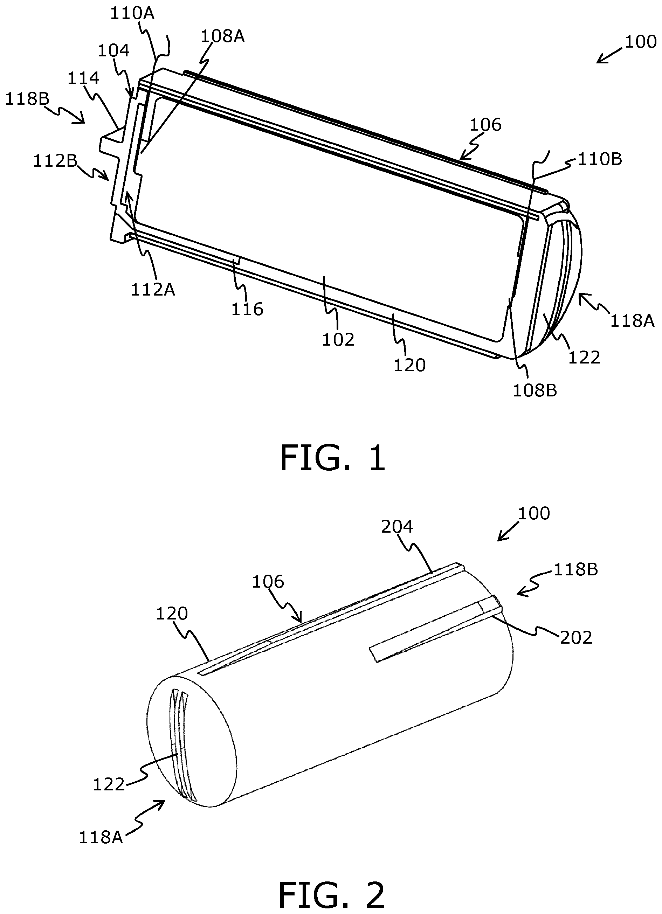

Referring to FIG. 1, illustrated is a perspective view of a cross-section of a power source unit **100,** in accordance with an embodiment of the present disclosure. Herein, the perspective view of the cross-section of the power source unit **100** shows components inside said power source unit **100.** The power source unit **100** comprises a battery **102,** a cap **104,** and a damping element **106.** The battery **102** comprises a first electrode **108A** and a second electrode **108B,** wherein the first electrode **108A** is contacted to a first electrical connector **110A** and the second electrode **108B** is contacted to a second electrical connector **110B.** The cap **104** comprises a first end **112A** and a second end **112B** that is opposite to the first end **112A,** and wherein the cap **104** is attached at least partly over the portion of the battery **102.** Optionally, the cap **104** comprises a protrusion **114** that extends outwards from a centre of the second end **112B.** Optionally, the cap **104** comprises an extension **116** extending from the first end **112A.**

The damping element **106** comprises: a third end **118A** and a fourth end **118B** that is opposite to the third end **118A,** and a receiving portion **120** that extends from the third end **118A** to the fourth end **118B** to define an internal hollow space that accommodates at least partly the battery **102,** the first electrical connector **110A,** the second electrical connector **110B,** and the cap **104.** Optionally, the third end **118A** of the damping element **106** is closed, and the fourth end **118B** has a first opening through which the protrusion **114** extends outwards. Optionally, the damping element **106** further comprises at least one of a first fin (not shown for sake of clarity) along the receiving portion **120,** and a second fin **122** on a surface of the third end **118A.**

It may be understood by a person skilled in the art that the FIG. 1 includes a simplified power source unit **100** for sake of clarity, which should not unduly limit the scope of the claims herein. The person skilled in the art will recognize many variations, alternatives, and modifications of embodiments of the present disclosure.

Referring to FIG. 2, illustrated is a perspective view of the power source unit **100** of FIG. 1, in accordance with an embodiment of the present disclosure. The perspective view of the power source unit **100** shows a fully manufactured power source unit **100.** Herein, accommodation of at least partly the battery **102,** the first electrical connector **110A** the second electrical connector **110B,** and the cap **104,** are not visible in the damping element **106** as they are accommodated internally. Optionally, the damping element **106** further comprises a first fin **202** and a third fin **204,** wherein the third fin **204** is positioned closer to a fourth end **118B.** Herein, the first fin may be located longitudinally in a particular section of the receiving portion **120** from a third end **118A,** and the third fin **204** covers almost whole of the receiving portion **120** between the third end **118A** and the fourth end **118B.** Optionally, the damping element **106** further comprises a second fin **122** on a surface of the third end **118A.**

It may be understood by a person skilled in the art that the FIG. 2 includes a simplified power source unit **100** for sake of clarity, which should not unduly limit the scope of the claims herein. The person skilled in the art will recognize many variations, alternatives, and modifications of embodiments of the present disclosure.

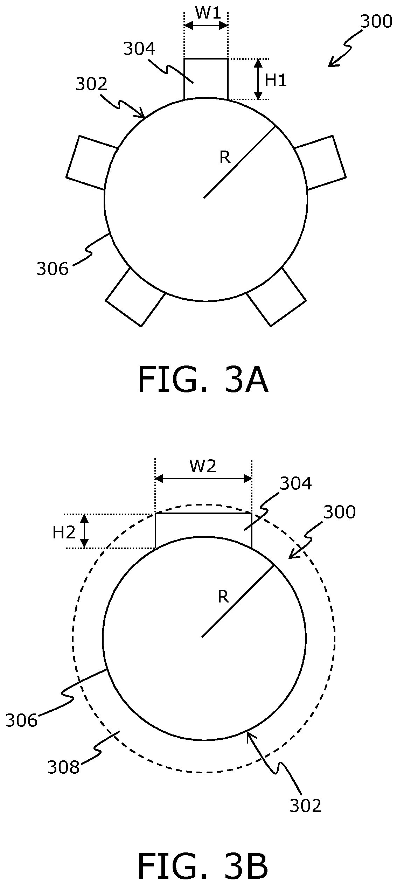

Referring to FIGs. 3A and 3B collectively, there is shown a damping element **302** of a power source unit **300,** wherein the damping element **302** comprises a first fin **304,** in accordance with an embodiment of the present disclosure. The damping element **302** comprises a third end **306,** wherein the third end **306** is of a circular shape of radius **R.**

In FIG. 3A, the power source unit **300** is not arranged in a vibration measurement device. The first fin **304** has following dimensions: a first predefined height **H1** and a first predefined width **W1.**

In FIG. 3B, the power source unit **300** is operatively connected with the vibration measurement device, wherein said power source unit **300** is accommodated in a space **308** within the vibration measurement device. Upon such accommodation, the space **308** within the vibration measurement device is less than a sum of the radius **R** and the first predefined height **H1.** When the space **308** within the vibration measurement device is reduced, the first predefined height **H1** of the first fin **304** starts reducing, such that the first predefined height **H1** transforms to a second predefined height **H2,** wherein the first predefined height **H1** is greater than the second predefined height **H2.** Simultaneously, the first predefined width **W1** increases to make the first fin **304** wider (namely, flatter), such that the first predefined width **W1** is transformed to a second predefined width **W2,** wherein the first predefined width **W1** is less than the second predefined width **W2.**

FIGs. 3A-B are merely examples, which should not unduly limit the scope of the claims herein. A person skilled in the art will recognize many variations, alternatives, and modifications of embodiments of the present disclosure.

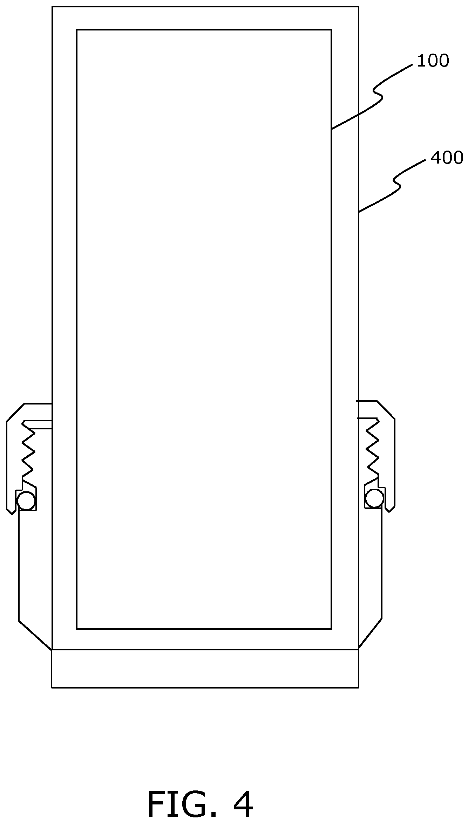

Referring to FIG. 4, there is shown a cross-section view of a vibration measurement device **400** comprising a power source unit **100** of FIG. 1, in accordance with an embodiment of the present disclosure. Herein, the power source unit **100** is operatively connected to a vibration measurement device **400.** In particular, the power source unit **100** is arranged inside the vibration measurement device **400.**

FIG. 4 is merely an example, which should not unduly limit the scope of the claims herein. A person skilled in the art will recognize many variations, alternatives, and modifications of embodiments of the present disclosure.

## Claims

1. A power source unit (100, 300) connected to a vibration measurement device (400) and the power source unit comprising:
a battery (102), wherein
a first electrode (108A) of the battery is contacted to a first electrical connector (110A); and
a second electrode (108B) of the battery is contacted to a second electrical connector (110B);
a cap (104), comprising:
a first end (112A) and a second end (112B) that is opposite to the first end; and
wherein the cap is attached at least partly over the portion of the battery; and
a damping element (106, 302), comprising:
a third end (118A, 306) and a fourth end (118B) that is opposite to the third end; and
a receiving portion (120) that extends from the third end to the fourth end to define an internal hollow space that accommodates at least partly the battery, the first electrical connector, the second electrical connector, and the cap.

2. The power source unit (100, 300) of claim 1, wherein the cap (104) further comprises a protrusion (114) that extends outwards from a centre of the second end (112B).

3. The power source unit (100, 300) of claim 2, wherein the third end (118A, 306) of the damping element (106, 302) is closed, and the fourth end (118B) has a first opening through which the protrusion (114) extends outwards.

4. The power source unit (100, 300) of any of the preceding claims, wherein the cap (104) further comprises an extension (116) extending from the first end (112A).

5. The power source unit (100, 300) of any of the preceding claims, wherein the damping element (106, 302) comprises one or more moulded parts.

6. The power source unit (100, 300) of any of the preceding claims, wherein a material used for manufacturing the damping element (106, 302) is at least one of: an elastic material, an elastomeric material, a non-homogenous material.

7. The power source unit (100, 300) of any of the preceding claims, wherein the damping element (106, 302) further comprises at least one of:
a first fin (202, 304) along the receiving portion (120);
a second fin (122) on a surface of the third end (118A, 306); and
a third fin (204) along the receiving portion (120).

8. The power source unit (100, 300) of claim 7, wherein at least one of: a number, a size, of the first fin (202, 304) or the second fin (122) or the third fin (204) depends on at least one of: a total area of the damping element (106, 302), a moulding material used for manufacturing the damping element, a compressibility of the moulding material, a geometry of the damping element.

9. The power source unit (100, 300) of any of the preceding claims, wherein a hardness of the damping element (106, 302) lies in a range of A50 to A90 on a Shore A hardness scale.

10. The power source unit (100, 300) of any of the preceding claims, wherein a thickness of the damping element (106, 302) lies in a range from 0.1 millimetres (mm) to 10 mm.

11. The power source unit (100, 300) of any of the preceding claims, wherein the power source unit is connected to the vibration measurement device (400), wherein the vibration measurement device is configured to be used in explosive atmospheres (ATEX).

12. The power source unit (100, 300) of any of the preceding claims, wherein a material used for manufacturing the cap (104) is a non-conductive material.

13. The power source unit (100, 300) of any of the preceding claims, wherein the receiving portion (120) is elongated.
